# EUROPÄISCHE PATENTSCHRIFT

(11) **EP 3 722 010 B1**
(45) Veröffentlichungstag und Bekanntmachung des Hinweises auf die Patenterteilung: **18.01.2023**
(21) Anmeldenummer: 19168138.6
(22) Anmeldetag: 09.04.2019
(51) Int. Cl.: B05C 1/10, B05D 3/06, B29C 67/08, B29D 7/00, B32B 38/14, B44C 5/04

(54) **VERFAHREN ZUR HERSTELLUNG EINER HOCHABRIEBFESTEN DEKORFOLIE MITTELS ROTATIONSSIEBDRUCK**
METHOD FOR PRODUCING A HIGHLY ABRASION-RESISTANT DECORATIVE FILM BY MEANS OF ROTARY SCREEN PRINTING
PROCÉDÉ DE FABRICATION D'UNE FEUILLE DE DÉCOR À RÉSISTANCE ÉLEVÉE À L'ABRASION PAR IMPRESSION EN SÉRIGRAPHIE ROTATIVE

(43) Veröffentlichungstag der Anmeldung: 14.10.2020
(73) Patentinhaber: SURTECO GmbH, 86647 Buttenwiesen (DE)
(72) Erfinder: Kösters, Christian, 48612 Horstmar (DE); Feldhoff, Stefan, 48336 Sassenberg (DE); Chabalowitz, Lars, 48336 Sassenberg (DE)
(74) Vertreter: Müller-Boré & Partner Patentanwälte PartG mbB

(56) Entgegenhaltungen:
- EP-A1- 1 186 708
- EP-B1- 2 285 916
- WO-A1-2014/113650
- WO-A1-2018/067650
- DE-A1- 3 718 561
- DE-A1- 4 426 831
- DE-A1-102004 034 790
- DE-A1-102008 023 499
- DE-A1-102013 002 457
- US-A1- 2012 064 312
- US-A1- 2015 252 209

## Beschreibung

Die vorliegende Erfindung betrifft ein Verfahren zur Herstellung einer hochabriebfesten Folie mittels eines Rotationssiebdruckverfahrens. Derartige Verfahren sind aus den Druckschriften EP 2 285 916 oder EP 1 186 708 bekannt.

Aus dem Stand der Technik ist die Verwendung von korundhaltigen Lacksystemen zur Herstellung von abriebfesten Folien bekannt, siehe die Druckschrift DE 10 2004 034790 A1. Der Korundauftrag auf das (Basis)-Substrat erfolgt dabei üblicherweise entweder über einen ARP-Kopf oder mittels Streuverfahren.

Beim Korundauftrag über einen ARP-Kopf ("Abrasiv Resistent Prepreg"; flüssiger Korundauftrag; ARP-Köpfe beispielsweise bei der Fa. Vits Technology GmbH erhältlich) schwankt bzw. pulsiert jedoch die Auftragsmenge über die Länge und Breite der Folie, so dass die erhaltene Folie keine durchgängig konstanten, sondern schwankende Abriebwerte aufweist.

Bei den bekannten Streuverfahren können lediglich Korundpartikel verwendet werden, die größer der Type F240 nach FEPA sind, da feinere Typen zu zugluftempfindlich sind. Zudem muss vor der Auftragung der Korundpartikel der Lack auf das Substrat appliziert werden. Ein ausreichendes Einsinken der Korundpartikel in der vorapplizierten Lackschicht erweist sich dabei oftmals als schwierig und findet nur ungenügend statt. Darüber hinaus ist nach Anwendung eines Streuverfahrens eine Überlackierung zwingend erforderlich, um eine angenehmere Haptik der Oberfläche der Folie zu erzielen.

Der vorliegenden Erfindung liegt daher die Aufgabe zugrunde, ein Verfahren zur Herstellung einer hochabriebfesten Folie mittels korundhaltigen Lacken bereitzustellen, welches reproduzierbar erlaubt, die Auftragungsmenge des Korunds zu variieren, so dass gezielt Folien mit einer vorgegebenen Abriebklasse bereitgestellt werden können, wobei die Korundpartikel durch das Verfahren so vollständig im Lack eingebettet sind, dass die Folien haptisch eine angenehm glatte Oberfläche aufweisen.

Diese Aufgabe wird durch die in den Ansprüchen gekennzeichneten Ausführungsformen der vorliegenden Erfindung gelöst.

Insbesondere wird erfindungsgemäß ein Verfahren zur Herstellung einer hochabriebfesten Folie bereitgestellt, umfassend die Schritte:
(a) Bereitstellen eines bahnförmigen Substrats;
(b) gegebenenfalls Auftragen eines Haftvermittlers auf das bahnförmige Substrat;
(c) gegebenenfalls Bedrucken des bahnförmigen Substrats;
(d) flächiges Auftragen eines strahlenhärtenden Lacksystems, das einen strahlenhärtenden Lack und Korundpartikel umfasst, auf das bahnförmige Substrat durch ein Rotationssiebdruckverfahren;
(e) gegebenenfalls Bestrahlen des strahlenhärtenden Lacksystems mit einem Excimer-Strahler, d.h. Mattierung mittels Excimerbestrahlung;
(f) gegebenenfalls partielles Auftragen eines strahlenhärtenden Strukturlacks auf das strahlenhärtende Lacksystem, d.h. gegebenenfalls (dekorsynchrone) Applikation einer haptischen Struktur;
(g) gegebenenfalls Bestrahlen des strahlenhärtenden Strukturlacks, sofern in Schritt (f) aufgebracht, mit einem Excimer-Strahler, und
(h) Bestrahlen des strahlenhärtenden Lacksystems zur vollständigen Härtung des strahlenhärtenden Lacksystems,
   wobei das strahlenhärtende Lacksystem Korundpartikel in einer Menge von 15 bis 40 Gew.-%, bezogen auf das Gesamtgewicht des strahlenhärtenden Lacksystems, umfasst,
   wobei das strahlenhärtende Lacksystem im Schritt (d) in einer Menge von 40 bis 150 g/m² aufgetragen wird,
   wobei die Auftragshöhe des strahlenhärtenden Lacksystems im Schritt (d) größer ist als der maximale Durchmesser der Korundpartikel,
   wobei der Durchmesser der Löcher des Rotationssiebs im Rotationssiebdruckverfahrens im Schritt (d) 2,5- bis 3-mal so groß ist wie der maximale Durchmesser der Korundpartikel, und
   wobei das strahlenhärtende Lacksystem im Schritt (d) eine Viskosität von 20 bis 40 dPa*s aufweist.

Der Begriff "hochabriebfest" bedeutet erfindungsgemäß, dass die Folie beständig gegen mechanische Einwirkung ist. Nach EN DIN 13329 (Ausgabe vom 01. Dezember 2017) sind Folien in Nutzungsklassen eingeteilt, wobei die Abriebfestigkeit nach dem sogenannten Taber Abraser Test nach EN DIN 438-6 gemessen wird. Der Anzahl der gemessenen Umdrehungen werden Abriebklassen zugeordnet. So bedeutet zum Beispiel das Erreichen von mindestens 2000 Umdrehungen die Abriebklasse AC3, die notwendig für die Einordnung in die Nutzungsklasse 23/31 (starke Beanspruchung Wohnung und mäßige leichte Beanspruchung Gewerblich) ist. Gemäß einer bevorzugten Ausführungsform weist die erfindungsgemäß hergestellte hochabriebfeste Folie mindestens die Abriebklasse AC3 auf.

Im Schritt (a) des erfindungsgemäßen Verfahrens wird ein bahnförmiges, flexibles Substrat ("Träger") bereitgestellt. Unter "flexibel" wird erfindungsgemäß verstanden, dass sich das bahnförmige Substrat über die Leitwalzen einer handelsüblichen Beschichtungsmaschine führen lässt. Das bahnförmige, flexible Substrat unterliegt erfindungsgemäß keiner weiteren Einschränkung. Erfindungsgemäß verwendbare Substrate können beispielsweise bedruckte und nicht bedruckte Durchimprägnate, Vorimprägnate, PP-, PVC-, PET-, ABS-, PMMA-, oder Acrylatcopolymerfolien sein. Die Dicken der Substrate unterliegen keiner besonderen Einschränkung und üblicherweise werden Substrate mit Dicken von 30 µm bis 4 mm verwendet.

Damit der strahlenhärtende Lack besser auf dem Substrat haftet, wird gegebenenfalls im optionalen Schritt (b) des erfindungsgemäßen Verfahrens ein Haftvermittler ("(Haft)-Primer") aufgetragen. Der Haftvermittler kann wässrig oder strahlenhärtend sein und mit den üblichen bekannten Lackierverfahren (beispielsweise Mayerbar, Raster (Tief- u. Flexodruck, Druckkamerrakel, etc.)) aufgetragen und mit den zugehörigen Trocknungs-/Härtungsverfahren (beispielsweise Schwebetrockner, Mikrowellentrockner, ESH und UV-Strahler, etc.) gehärtet/getrocknet werden. Die Auftragungsmengen des Haftvermittlers liegen dabei üblicherweise von 2 bis 15 g/m².

im optionalen Schritt (c) des erfindungsgemäßen Verfahrens wird das bahnförmige Substrat gegebenenfalls mit einem Dekor bedruckt. Die für das aufgedruckte Dekormuster verwendete Druckfarbe und das verwendete Druckverfahren unterliegen dabei keiner besonderen Einschränkung. Beispielsweise können bekannte Farben mit casein- oder acrylatbasierenden Bindemittelsystemen und organischen oder anorganischen Farbpigmenten verwendet werden. Die Bedruckung kann beispielsweise über Digitaldruck erfolgen. Der optionale Schritt (c) kann sowohl vor als auch nach dem Schritt (b) erfolgen.

Im Schritt (d) des erfindungsgemäßen Verfahrens wird ein strahlenhärtendes Lacksystem auf das bahnförmige Substrat (falls Schritt (b) durchgeführt wurde, auf den Haftvermittler) durch ein Rotationssiebdruckverfahren aufgetragen. Das erfindungsgemäß verwendete strahlenhärtende Lacksystem umfasst dabei einen strahlenhärtenden Lack und Korundpartikel (Aluminiumoxid-Partikel). Beispielsweise umfasst das Lacksystem diverse strahlenhärtende Acrylat-, Epoxyacrylat- oder Urethanacrylatbindemittel, sowie Reaktivverdünner (z.B. Ebecryl 267, Ebecryl 4858, Ebecryl 3703 und DPGDA). Des Weiteren umfasst das Lacksystem vorzugsweise Additive wie Verlauf-, Netzmittel und Entschäumer, welche dem Fachmann bekannt sind. Für einen UV-Lack können Fotoinitiatoren wie z.B. TPO/TPO-L (beispielsweise 1 - 6 Gew.-%) eingesetzt werden. Die Menge der Fotoinitiatoren hängt davon ab, ob die UV-Härtung unter atmosphärischer oder inerter Bedingung stattfindet. Durch die Wahl/Zusammensetzung der Bindemittel können die Abriebwerte und Flexibilität der Beschichtung variiert werden.

Die Korundpartikel in dem erfindungsgemäß verwendeten Lacksystem unterliegen keiner besonderen Einschränkung. Es können beispielsweise Edelkorundtypen von F180 bis F400, beispielsweise F180, F220, F240, F280, F320, F360 und F400 (nach FEPA) verwendet werden.

Das hochabriebfeste strahlenhärtende Lacksystem wird mittels eines Rotationssiebdruckverfahrens flächig auf die (gegebenenfalls bedruckte) Folie (bzw. auf die Haftmittelschicht) appliziert. Derartige Rotationssiebdruckverfahren sind dem Fachmann bekannt. Um die erfindungsgemäßen hohen Abriebwerte zu erreichen, enthält der strahlenhärtende Lack Korundpartikel. Die Höhe der zu erzielenden Abriebwerte hängen von der Menge und der Korngröße der verwendeten Korundtype, sowie von der Bindemittelmatrix und der Auftragsmenge des verwendeten Lacks ab. Gemäß der vorliegenden Erfindung werden bevorzugt Edelkorundtypen F280/F240 verwendet, da durch diese zuverlässig die Abriebklasse AC3 realisiert werden kann. Um eine höhere Abriebklasse wie AC4 oder AC5 zu realisieren, sind gröbere Korundtypen und dadurch bedingt höhere Lackauftragsmengen notwendig. Für AC1 und AC2 sind entsprechend niedrigere Korundtypen mit entsprechend geringeren Auftragsmengen zu verwenden.

Gemäß der vorliegenden Erfindung umfasst das strahlenhärtende Lacksystem Korundpartikel in einer Menge von 15 bis 40 Gew.-%, bezogen auf das Gesamtgewicht des strahlenhärtenden Lacksystems, besonders bevorzugt von 25 bis 30 Gew.-%. Bei zu geringem Korundanteil besteht die Gefahr, dass die angestrebten Abriebwerte nicht erreicht werden können, wohingegen bei einem zu hohem Korundanteil die vollständige Einbettung in das Lacksystem nicht mehr gegeben sein kann, so dass sich Eigenschaften wie Flexibilität, Abrieb und angenehme Haptik verschlechtern könnten.

Gemäß der vorliegenden Erfindung wird das strahlenhärtende Lacksystem im Schritt (d) in einer Menge von 40 bis 150 g/m² aufgetragen, besonders bevorzugt von 100 bis 130 g/m², so dass daraus ein Abriebwert der erfindungsgemäß hergestellten Folie von mindestens AC3 resultiert.

Gemäß der vorliegenden Erfindung ist die Auftragshöhe des strahlenhärtenden Lacksystems im Schritt (d) größer als der maximale Durchmesser der Korundpartikel (siehe d3-Wert der Korngrößenverteilung). Dies führt dazu, dass die Korundpartikel vollständig im Lack eingebettet sind und nicht aus der Oberfläche herausschauen, so dass die erfindungsgemäß hergestellte hochabriebfeste Folien eine haptisch möglichst glatte und angenehme Folienoberfläche aufweist.

Je nachdem weiche Korundtype verwendet wird, muss das Rotationssieb im Rotationssiebdruckverfahren im Schritt (d) des erfindungsgemäßen Verfahrens darauf abgestellt werden. Der Durchmesser der Löcher im Rotationssieb ist daher erfindungsgemäß 2,5- bis 3-mal so groß wie der maximale Durchmesser der Korundpartikel (siehe d3-Wert der Korngrößenverteilung), um ein Zusetzen des Siebes zu verhindern.

Das strahlenhärtende Lacksystem ist von der Viskosität und von der Entschäumung her speziell auf das Rotationssiebdruckverfahren einzustellen. Das Lacksystem darf im Stillstand des Rotationssiebs nicht durch das Sieb fließen. Bei entsprechender Einstellung der Entschäumung des Lacksystems entstehen beim Durchlaufen des Rotationssiebes keine Blasen, die optisch wie mechanisch stören würden. Des Weiteren sollte das hochviskose Lacksystem gute Fließeigenschaften haben, damit das Lacksystem nach der Applikation mittels des Rotationssiebs noch vor der strahlenhärtenden Trocknung gleichmäßig verfließen kann. Die Verarbeitungsviskosität liegt daher erfindungsgemäß im Bereich von 20 bis 40 dPa*s, bevorzugt von 25 bis 35 dPa*s. Die Auftragsmengen des Rotationssiebes werden durch die Rotationssiebtype, die Lackviskosität und den Vorschub bestimmt. Um beispielsweise eine Beschichtung mit der Abriebklasse AC3 zu erhalten, kann man ca. 100 bis 130 g/m² eines korundhaltigen strahlenhärtenden Lackes (Korundtype F240/F280) verwenden, wobei dieser beispielsweise mit einem Vorschub von 10 bis 50 m/min, bevorzugt 30 bis 40 m/min, aufgetragen wird. Der Vorschub wird limitiert durch die zu übertragende Lackmenge und dem Verlauf des Lackes. Das Rotationssieb wird über die Parameter Wandstärke, Löcher per Inch, offene Fläche und Lochdurchmesser definiert. Kommerziell sind geeignete Rotationssiebe beispielsweise bei der Firma SPGPrints erhältlich.

Nachfolgende Siebparameter können beispielsweise für die entsprechenden Korundtypen verwendet werden:

| Korund-Type | max. Korn-größe d3-Wert [µm] | Screen-Type | Mesh holes/inch | thickness [µm] | open Area [%] | Hole diameter [µm] | Wet Paste Volume [cm³/m²] |
|---|---|---|---|---|---|---|---|
| F280 | 59 | SP | 80 | 150 | 40 | 201 | 60 |
| F240 | 70 | CH | 40 | 200 | 40 | 400 | 80 |

Im Schritt (h) des erfindungsgemäßen Verfahrens wird das strahlenhärtende Lacksystem zur vollständigen Härtung des Lacksystems bestrahlt. Die Art der Bestrahlung unterliegt keiner besonderen Einschränkung, solange die Art der Bestrahlung dazu geeignet ist, das Lacksystem vollständig zu härten. Dies ist von der spezifischen Zusammensetzung (verwendeter Lack, gegebenenfalls verwendeter Fotoinitiator) abhängig. Beispielsweise kann mit UV-Strahlung, UVC-Strahlung oder Elektronenstrahlung (ESH) bestrahlt werden. Die Bestrahlung kann dabei unter Sauerstoffatmosphäre oder in einer inerten Schutzgasatmosphäre (beispielsweise Stickstoff) durchgeführt werden, bevorzugt unter Schutzgasatmosphäre. Gemäß einer bevorzugten Ausführungsform wird mit UV-Strahlung bestrahlt, insbesondere mit Quecksilber-, Fe- oder Ga-dotierten Strahlern unter Stickstoffatmosphäre. Da die gegebenenfalls im Lacksystem verwendeten Fotoinitiatoren teuer sind und oftmals unangenehme Gerüche an der Folie hinterlassen und auch gesundheitsgefährdend sind, wird bevorzugt unter inerter Stickstoffatmosphäre, bei welcher die Zugabe der Fotoinitiatormengen stark reduziert werden kann, bestrahlt. Die Lackschicht kann beispielsweise bei einem Vorschub von 20 bis 40 m/min mit 3 Hg-Strahlern mit jeweils 200 W/cm unter inerter Atmosphäre gehärtet werden. Die gleiche Härtung kann auch beispielsweise durch einen ESH-Strahler mit einer Leistung von 220 kV und 50 kGy Energiedosis erreicht werden. Durch Schritt (e) ist die Produktion der hochabriebfesten Folie abgeschlossen.

Das Verfahren zur Herstellung einer solch hochabriebfesten Folie gemäß der vorliegenden Erfindung erlaubt es vorteilhafterweise, reproduzierbar die Auftragungsmenge des Korunds zu variieren, so dass gezielt Folien mit unterschiedlichen (hohen) Abriebklassen bereitgestellt werden können. Die Applikation mittels Rotationssieb bietet gegenüber den Alternativverfahren des Korundauftrags mittels ARP-Kopf oder Streuverfahren den großen Vorteil, einfach sehr glatte Folienoberflächen mit vollständig eingebetteten Korundpartikel zu erzeugen. Demzufolge weist die erzeugte Folie haptisch eine angenehm glatte Oberfläche auf.

Bei der vorstehend beschriebenen Herstellung hochabriebfester Folien werden aufgrund der hohen Lackauftragsmenge problemlos glänzende Folien erhalten, da gegebenenfalls verwendete Mattierungsmittelteilchen durch Einsinken in den Lack nicht wirksam werden können.

Um matte Lackoberflächen zu erhalten, wird optional vor dem Schritt (h) in einem Schritt (e) das strahlenhärtende Lacksystem mit einem Excimer-Strahler bestrahlt und dadurch mattiert, d.h. das noch nasse Lacksystem durchläuft vor der finalen Härtung im Schritt (h) eine Excimer-Bestrahlung unter inerten Bedingungen (beispielsweise Stickstoffatmosphäre), wobei der Excimer-Strahler, vorzugsweise bei exakt 172 nm Wellenlänge, die oberste Lackschicht des Lacksystems angeliert und dabei gleichmäßig faltet. Die Leistung des Excimers liegt üblicherweise bei 10 bis 25 W/cm. Für die Faltung der obersten Lackschicht wird eine bestimmte Zeit benötigt. Diese liegt beispielsweise in einem Bereich von min. 0,3 bis 1 Sekunde. Der Excimer-Strahler ist vorzugsweise so in der Anlage platziert (Abstand Excimer-Strahler zum Ort der finalen Härtung), dass bei einem gewünschten Vorschub die Faltung möglich ist. Durch die Wahl der Bindemittel kann der Fachmann auf die Stärke/Intensität der Faltung Einfluss nehmen.

Durch den optionalen Schritt (e) können Glanzgrade von 1 bis 6 Glanzgradpunkten, gemessen unter dem 60° Winkel nach Gardner (DIN EN ISO 2813), erreicht werden. Durch die Verwendung einer UV-Vorgelierung (beispielsweise unter Sauerstoffatmosphäre) vor der Excimer-Bestrahlung kann der Glanzgrad durch eine feinere Faltung noch angehoben werden. Des Weiteren wird die Faltung durch die Vorgelierung deutlich gleichmäßiger. Durch die dann feinere Faltung verändert sich der Glanzgrad, gemessen im 85°-Winkel, wesentlich stärker als im 60°-Winkel. Die UV-Vorgelierung kann mittels UV-LED oder einer PAC-Einheit (Photon Activation Chamber, beispielsweise Fa. IOT Oberflächentechnologien GmbH) erfolgen. Die Erhöhung des Glanzgrades hängt dabei von der Bindemittelzusammensetzung des strahlenhärtenden Lackes ab.

Beispiel für eine Glanzgradänderung durch eine Vorgelierung und Excimer-Bestrahlung:

### (Standard UV-Lack mit 10 µm Nassauftrag, 30 m/min Vorschub, 200 W/cm Quecksilberstrahler)

| **Härtung** | **Glanzgrad [60°/85°]** |
|---|---|
| Ohne Vorgelierung, ohne Excimer | 63 / 94 |
| Ohne Vorgelierung, mit Excimer | 1,8 / 5 |
| Mit PAC Vorgelierung, mit Excimer | 6,4 / 67 |

Wie vorstehend beschrieben erfolgt im Anschluss an den optionalen Schritt (e) dann im Schritt (h) die vollständige Härtung des strahlenhärtenden Lacksystems und die Produktion der hochabriebfesten Folie ist abgeschlossen.

Über das Verfahren der vorliegenden Erfindung können auch strukturierte Folien hergestellt werden, insbesondere Folien, die eine dekorsynchrone Struktur aufweisen. Unter dem Begriff "dekorsynchrone Struktur" wird erfindungsgemäß verstanden, dass die Haptik der Folienoberfläche der Optik der Bedruckung der Oberfläche entspricht. Auf diese Weise ist es vorteilhafterweise möglich, andere Beläge, wie zum Beispiel eine Holz- oder Steinoberfläche, optisch und haptisch nachzuahmen. Hierzu wird entweder ein bedrucktes Substrat verwendet, oder auf dem in der vorliegenden Erfindung verwendeten Substrat wird ein Dekor aufgedruckt.

Damit zusätzlich eine (dekorsynchrone) Struktur auf die erfindungsgemäß hergestellte Folie aufgebracht werden kann, wird das vorher im Schritt (d) flächig aufgebrachte Lacksystem vorzugsweise nur angeliert und nicht vollkommen durchgehärtet ("Untervernetzung"). Diese Untervernetzung ist wichtig, damit der nachfolgende strahlenhärtende Strukturlack zum flächigen Lack Haftung herstellen kann. Der flächige strahlenhärtende Lack wird nur soweit gehärtet/angeliert, dass er an den nachfolgenden Umlenkwalzen gerade nicht mehr klebt. Vorzugsweise werden 1 bis 2 200 W/cm Quecksilberstrahler unter Sauerstoffatmospäre bei einem Vorschub von vorzugsweise 20 bis 40 m/min verwendet, um diese Angelierung zu erzielen. Die genaue Strahlerleistung stimmt der Fachmann auf das verwendete Lacksystem (geeignete Wahl der Fotoinitiatoren, z.B. TPO-L beim UV-Lack) ab.

Insbesondere umfasst in dieser Ausführungsform das Verfahren der vorliegenden Erfindung weiter den Schritt (f) vor dem Schritt (h).

Im optionalen Schritt (f) wird ein strahlenhärtender Strukturlack auf das strahlenhärtende Lacksystem partiell aufgetragen. Die Art der Auftragung unterliegt dabei keiner besonderen Einschränkung. Es können sämtliche dem Fachmann bekannte Auftragungsverfahren verwendet werden (beispielsweise mit tiefgravierten Rastern im direkten Tiefdruck, im Rotationssiebdruckverfahren, CAD-Verfahren (Curing against drum)). Gemäß einer bevorzugten Ausführungsform wird der strahlenhärtende Strukturlack mittels eines weiteren Rotationssiebes aufgetragen. Das zuvor im Schritt (d) flächig aufgetragene strahlenhärtende Lacksystem unterscheidet sich dabei erheblich in der Rheologie zum strahlenhärtenden Strukturlack. Das flächig aufgetragene strahlenhärtende Lacksystem soll möglichst eine glatte gut verlaufende Oberfläche ausbilden. Beim Strukturlack ist diese Fähigkeit nicht erwünscht. Hier soll die übertragene Lackstruktur nicht vor der Härtung wieder zerlaufen. Der Strukturlack hat daher eine strukturviskose Rheologie. Das ist besonders wichtig, um möglichst exakte Strukturen erzielen zu können.

Wird beim Bedrucken der Folie im Schritt (b) eine Digitaldruckanlage verwendet, kann diese eine Passermarke mitdrucken. Ein nachfolgender Sensor nimmt die Passermarke ab und steuert das Rotationssieb bei der Auftragung des strahlenhärtenden Strukturlacks automatisch auf Synchronität ein. Die Struktur ist je nach verwendetem Rotationssiebtyp in der Höhe und der Auflösung wählbar. Für Dekorfolien ist eine Höhe von 20 bis 150 µm üblich. Für synchrone Strukturen hängt der Rapport des Dekors vom Umfang des Rotationssiebes ab. Für nicht synchron aufgebrachte Strukturen (Allover-Dekore) gibt es keine Rapportlängenbegrenzung. Diese wird vielmehr durch die maximal zu verarbeitende Dateigröße des Dekors in der Länge begrenzt.

Wie vorstehend beschrieben erfolgt im Anschluss dann im Schritt (h) die vollständige Härtung des strahlenhärtenden Lacksystems, wobei in dieser Ausführungsform gleichzeitig auch der strahlenhärtende Strukturlack vollständig aushärtet. Die finale Härtung kann mittels ESH oder UV-Strahlung erfolgen. Bei der UV-Härtung können Fe- oder Ga-dotierte Strahler, bevorzugt aber Quecksilberstrahler zum Einsatz kommen. Die Bestrahlung kann dabei unter Sauerstoffatmosphäre oder in einer inerten Schutzgasatmosphäre (beispielsweise Stickstoff) durchgeführt werden, bevorzugt unter Schutzgasatmosphäre. Die Lackschicht kann beispielsweise bei einem Vorschub von 20 bis 40 m/min mit 3 Hg-Strahlern mit jeweils 200 W/cm unter inerter Atmosphäre gehärtet werden. Die gleiche Härtung kann aber auch durch einen ESH-Strahler mit einer Leistung von 220 kV und 50 kGy Energiedosis erreicht werden.

Die Produktion der hochabriebfesten Folie mit (dekorsynchroner) Struktur ist damit nach Schritt (h) abgeschlossen. Bei derart hergestellten hochabriebfesten Folien werden aufgrund der hohen Lackauftragsmenge glänzende Folien erhalten, da gegebenenfalls verwendete Mattierungsmittelteilchen durch Einsinken in den Lack nicht wirksam werden können. Durch diese Ausführungsform der vorliegenden Erfindung können somit glänzende Lackoberflächen ohne Probleme hergestellt werden.

Um matte Lackoberflächen zu erhalten, wird in einem optionalen Schritt (g) vor der finalen Härtung (also nach dem Schritt (f) und vor dem finalen Schritt (h)) die Lackstruktur durch einen Excimer mattiert, d.h. die noch nasse Lackstruktur durchläuft vor der finalen Härtung eine Excimer-Bestrahlung unter inerten Bedingungen (beispielsweise Stickstoff-atmosphäre), wobei der Excimer-Strahler, vorzugsweise bei exakt 172 nm Wellenlänge, die oberste Lackschicht des Lacksystems angeliert und dabei gleichmäßig faltet. Die Leistung des Excimers liegt üblicherweise bei 10 bis 25 W/cm. Der Schritt (g) entspricht damit in seiner Ausführung dem vorher beschriebenen Schritt (e).

Da das zuvor applizierte hochabriebfeste Lacksystem nur angeliert ist, wird auch dieses, wenn auch deutlich feiner, durch den Excimer-Strahler an der Oberfläche gefaltet. Somit wird die Lackoberfläche des ersten Lacks (aus Schritt (d)) sowie die Lackoberfläche des Strukturlackes (aus Schritt (f)) durch den Excimer gemeinsam gefaltet. Die Faltung des ersten Lackes ist dabei wesentlich feiner als die des Strukturlacks. Das äußert sich dann auch im Glanzgrad. Die Faltung des angelierten ersten Lackes kann von deutlich bis gar nicht erfolgen, d.h. der Glanzgrad wird in einem Bereich von "kaum" bis hin zu "deutlich" matter. Die Stärke der Mattierung ist abhängig vom Grad der Vorgelierung (Oberflächenaushärtung). Je geringer die Vorgelierung, desto stärker ist die Mattierung durch den Excimer.

Gemäß einer bevorzugten Ausführungsform erfolgt die Bestrahlung in dieser Ausführungsform im Schritt (h) unter inerter Atmosphäre (beispielsweise Stickstoff), da hier sehr große Lackschichten von 70 bis 200 µm und höher gehärtet werden müssen.

Eine Struktur kann im Verfahren der vorliegenden Erfindung auch über andere, dem Fachmann bekannte Lackierverfahren (beispielsweise tiefgravierte Rasterwalzen über Tiefdruck/Flexodruck etc.) erzeugt werden.

Die hochabriebfeste Folie, welche durch das vorstehende Verfahren hergestellt wurde, wird bevorzugt z.B. als Ummantelungsfolie für Übergangsschienen und Sockelleisten, als Beschichtung für Tischoberflächen und Fußböden und für Türen und Türzargen eingesetzt. Die so hergestellte hochabriebfeste Folie kann in vielfältigen anderen Anwendungen verwendet werden, bei denen ein erhöhter Abriebwert notwendig ist.

Das Verfahren zur Herstellung einer hochabriebfesten Folie der vorliegenden Erfindung erlaubt es vorteilhafterweise, reproduzierbar die Auftragungsmenge des Korunds zu variieren, so dass gezielt Folien mit unterschiedlichen (hohen) Abriebklassen bereitgestellt werden können. Die Applikation mittels Rotationssieb bietet gegenüber den Alternativverfahren des Korundauftrags mittels ARP-Kopf oder Streuverfahren den großen Vorteil, einfach sehr glatte Folienoberflächen mit vollständig eingebettete Korundpartikel zu erzeugen. Demzufolge weist die erzeugte Folie haptisch eine angenehm glatte Oberfläche auf. Zudem ist es vorteilhafterweise möglich, durch eine weitere Applikation (insbesondere einer weiteren Rotationssiebapplikation) eines Strukturlacks, insbesondere in Verbindung mit einer Digitaldruckanlage, eine dekorsynchrone Struktur zu applizieren.

## Patentansprüche

1. Verfahren zur Herstellung einer hochabriebfesten Folie, umfassend die Schritte:
(a) Bereitstellen eines bahnförmigen Substrats;
(d) flächiges Auftragen eines strahlenhärtenden Lacksystems, das einen strahlenhärtenden Lack und Korundpartikel umfasst, auf das bahnförmige Substrat durch ein Rotationssiebdruckverfahren; und
(h) Bestrahlen des strahlenhärtenden Lacksystems zur vollständigen Härtung des strahlenhärtenden Lacksystems,
wobei das strahlenhärtende Lacksystem Korundpartikel in einer Menge von 15 bis 40 Gew.-%, bezogen auf das Gesamtgewicht des strahlenhärtenden Lacksystems, umfasst,
wobei das strahlenhärtende Lacksystem im Schritt (d) in einer Menge von 40 bis 150 g/m² aufgetragen wird,
wobei die Auftragshöhe des strahlenhärtenden Lacksystems im Schritt (d) größer ist als der maximale Durchmesser der Korundpartikel,
wobei der Durchmesser der Löcher des Rotationssiebs im Rotationssiebdruckverfahrens im Schritt (d) 2,5- bis 3-mal so groß ist wie der maximale Durchmesser der Korundpartikel, und
wobei das strahlenhärtende Lacksystem im Schritt (d) eine Viskosität von 20 bis 40 dPa*s aufweist.

2. Verfahren zur Herstellung einer hochabriebfesten Folie nach Anspruch 1, wobei das Verfahren nach dem Schritt (a) und vor dem Schritt (d) den Schritt (b) umfasst:
(b) Auftragen eines Haftvermittlers auf das bahnförmige Substrat.

3. Verfahren zur Herstellung einer hochabriebfesten Folie nach Anspruch 1 oder 2, wobei das Verfahren nach dem Schritt (a) und vor dem Schritt (d) den Schritt (c) umfasst:
(c) Bedrucken des bahnförmigen Substrats.

4. Verfahren zur Herstellung einer hochabriebfesten Folie nach einem der Ansprüche 1 bis 3, wobei die Korundpartikel eine Größe von F180 bis F400 nach FEPA-Norm aufweisen.

5. Verfahren zur Herstellung einer hochabriebfesten Folie nach einem der Ansprüche 1 bis 4, wobei das Verfahren weiter den Schritt (e) vor dem Schritt (h) umfasst:
(e) Bestrahlen des strahlenhärtenden Lacksystems mit einem Excimer-Strahler.

6. Verfahren zur Herstellung einer hochabriebfesten Folie nach einem der Ansprüche 1 bis 5, wobei das Verfahren weiter den Schritt (f) vor dem Schritt (h) umfasst:
(f) partielles Auftragen eines strahlenhärtenden Strukturlacks auf das strahlenhärtende Lacksystem.

7. Verfahren zur Herstellung einer hochabriebfesten Folie nach Anspruch 6, wobei die Auftragshöhe des strahlenhärtenden Strukturlacks im Schritt (f) von 20 bis 150 µm beträgt.

8. Verfahren zur Herstellung einer hochabriebfesten Folie nach Anspruch 6 oder 7, wobei das Verfahren weiter den Schritt (g) nach dem Schritt (f) und vor dem Schritt (h) umfasst:
(g) Bestrahlen des strahlenhärtenden Strukturlacks mit einem Excimer-Strahler.

## Claims

1. A method for producing a highly abrasion-resistant film, comprising the steps:
(a) providing a web-shaped substrate ;
(d) applying a radiation-curing lacquer system in planar manner, which comprises a radiation-curing lacquer and corundum particles, to the web-shaped substrate by a rotary screen printing process; and
(h) irradiating the radiation-curing lacquer system to fully cure the radiation-curing lacquer system,
wherein the radiation-curing lacquer system comprises corundum particles in an amount of 15 to 40 % by weight, based on the total weight of the radiation-curing lacquer system,
wherein the radiation-curing lacquer system is applied in step (d) in an amount of 40 to 150 g/m²,
where the application height of the radiation-curing lacquer system in step (d) is greater than the maximum diameter of the corundum particles,
wherein the diameter of the holes of the rotary screen in the rotary screen printing process in step (d) is 2.5 to 3 times the maximum diameter of the corundum particles, and
wherein the radiation-curing lacquer system in step (d) has a viscosity of 20 to 40 dPa*s.

2. The method for producing a highly abrasion-resistant film according to claim 1, wherein the method comprises step (b) after step (a) and before step (d):
(b) applying an adhesion promoter to the web-shaped substrate.

3. The method for producing a highly abrasion-resistant film according to claim 1 or 2, wherein the method comprises step (c) after step (a) and before step (d):
(c) printing on the web-shaped substrate.

4. The method for producing a highly abrasion-resistant film according to any one of claims 1 to 3, wherein the corundum particles have a size of F180 to F400 according to the FEPA standard.

5. The method for producing a highly abrasion-resistant film according to any one of claims 1 to 4, wherein the method further comprises step (e) before step (h): (e) irradiating the radiation-curing lacquer system with an excimer emitter.

6. The method for producing a highly abrasion-resistant film according to any one of claims 1 to 5, wherein the method further comprises step (f) before step (h):
(f) partially applying a radiation-curing structural lacquer to the radiation-curing lacquer system.

7. The method for producing a highly abrasion-resistant film according to claim 6, wherein the application height of the radiation-curing structural lacquer in step (f) is from 20 to 150 µm.

8. The method for producing a highly abrasion resistant film according to claim 6 or 7, wherein the method further comprises step (g) after step (f) and before step (h):
(g) irradiating the radiation-curing structural lacquer with an excimer emitter.

## Revendications

1. Procédé de production d'un film hautement résistant à l'abrasion, comprenant les étapes :
(a) fournir un substrat en forme de bobine;
(d) appliquer un système de laque à durcissement par rayonnement de manière plane, qui comprend une laque à durcissement par rayonnement et des particules de corindon, au substrat en forme de bobine par un processus de sérigraphie rotative; et
(h) irradier le système de laque à durcissement par rayonnement pour durcir complètement le système de laque à durcissement par rayonnement,
dans lequel le système de laque à durcissement par rayonnement comprend des particules de corindon en une quantité de 15 à 40 % en poids, basée sur le poids total du système de laque à durcissement par rayonnement,
dans lequel le système de laque à durcissement par rayonnement est appliqué à l'étape (d) en une quantité de 40 à 150 g/m²,
où la hauteur d'application du système de laque à durcissement par rayonnement à l'étape (d) est supérieure au diamètre maximal des particules de corindon, dans lequel le diamètre des orifices de l'écran rotatif dans le processus de sérigraphie rotative à l'étape (d) est 2,5 à 3 fois le diamètre maximal des particules de corindon, et
dans lequel le système de laque à durcissement par rayonnement à l'étape (d) a une viscosité de 20 à 40 dPa*s.

2. Procédé de production d'un film hautement résistant à l'abrasion selon la revendication 1, dans lequel le procédé comprend l'étape (b) après l'étape (a) et avant l'étape (d) :
(b) appliquer un promoteur d'adhésion au substrat en forme de bobine.

3. Procédé de production d'un film hautement résistant à l'abrasion selon la revendication 1 ou 2, dans lequel le procédé comprend l'étape (c) après l'étape (a) et avant l'étape (d) :
(c) imprimer sur le substrat en forme de bobine.

4. Procédé de production d'un film hautement résistant à l'abrasion selon l'une quelconque des revendications 1 à 3, dans lequel les particules de corindon ont une taille de F180 à F400 selon la norme FEPA.

5. Procédé de production d'un film hautement résistant à l'abrasion selon l'une quelconque des revendications 1 à 4, dans lequel le procédé comprend en outre l'étape (e) avant l'étape (h) :
(e) irradier le système de laque à durcissement par rayonnement avec un émetteur à excimère.

6. Procédé de production d'un film hautement résistant à l'abrasion selon l'une quelconque des revendications 1 à 5, dans lequel le procédé comprend en outre l'étape (f) avant l'étape (h) :
(f) appliquer partiellement une laque structurelle à durcissement par rayonnement au système de laque à durcissement par rayonnement.

7. Procédé de production d'un film hautement résistant à l'abrasion selon la revendication 6, dans lequel la hauteur d'application de la laque structurelle à durcissement par rayonnement à l'étape (f) va de 20 à 150 µm.

8. Procédé de production d'un film hautement résistant à l'abrasion selon la revendication 6 ou 7, dans lequel le procédé comprend en outre l'étape (g) après l'étape (f) et avant l'étape (h) :
(g) irradier la laque structurelle à durcissement par rayonnement avec un émetteur à excimère.
